# EUROPEAN PATENT APPLICATION

(11) **EP 4 723 507 A1**
(43) Date of publication of application: **08.04.2026**
(21) Application number: 24845770.7
(22) Date of filing: 29.05.2024
(51) Int. Cl.: H04B 7/06, H04B 7/08, H04B 7/0491, H04W 76/15, H04W 72/0453, H04W 72/044, H04W 84/12

(54) **ELECTRONIC DEVICE AND OPERATING METHOD THEREFOR**

(30) Priority: 21.07.2023 KR 20230095464; 04.09.2023 KR 20230117250
(71) Applicant: Samsung Electronics Co., Ltd., Suwon-si, Gyeonggi-do 16677 (KR)
(72) Inventor: CHOI, Junsu, Suwon-si Gyeonggi-do 16677 (KR); CHOI, Hyeonu, Suwon-si Gyeonggi-do 16677 (KR)
(74) Representative: HGF
(86) International application number: PCT/KR2024/007319
(87) International publication number: WO 2025/023466

(57) **Abstract**

An electronic device according to an embodiment may be, when instructions are individually or collectively executed by a processor, caused to: transmit one or more sector sweep frames for beamforming to an external electronic device performing a multi-link operation with the electronic device, through a first frequency band corresponding to a millimeter wave wireless communication channel; receive, from the external electronic device, feedback information on the one or more sector sweep frames through a second frequency band different from the first frequency band; transmit a data frame to the external electronic device through the first frequency band based on the basis of the feedback information; and receive the data frame from the external electronic device through the second frequency band.

## Description

### TECHNICAL FIELD

Embodiments of the present disclosure relate to an electronic device and an operating method thereof.

### BACKGROUND ART

With the advent of electronic devices such as a smartphone, a tablet PC, or a laptop, the demand for high-speed wireless connectivity has exploded. These trends and the growing demand for high-speed wireless connectivity have firmly established the IEEE 802.11 wireless communication standard as a representative and universal high-speed wireless communication standard in the information technology (IT) industry. Early wireless local area network (LAN) technologies developed around 1997 could support transmission speeds of up to 1 to 2 megabits per second (Mbps). Since then, based on the demand for faster wireless connectivity, WLAN technologies have steadily developed, including new WLAN technologies that improve transmission speeds, such as IEEE 802.11n, 802.11ac, and 802.11ax. The current latest standard, IEEE 802.11 ax, has a maximum transmission speed of several gigabits per second (Gbps).

Today, WLANs provide high-speed wireless connections to users in various public places such as offices, airports, stadiums, and stations, in addition to private places such as homes. Accordingly, WLAN has greatly influenced people's lifestyles and culture and has become a lifestyle in modern life.

### DISCLOSURE OF THE INVENTION

### TECHNICAL SOLUTIONS

An electronic device, according to an embodiment, may include a wireless communication circuit configured to transmit and receive a wireless signal. The electronic device may include a processor operatively connected to the wireless communication circuit. The electronic device may include memory storing instructions. The instructions, when executed by the processor individually or collectively, may cause the electronic device to transmit, to an external electronic device performing a multi-link operation (MLO) with the electronic device, one or more sector sweep frames for beamforming, through a first frequency band corresponding to a millimeter wave wireless communication channel. The instructions, when executed by the processor individually or collectively, may cause the electronic device to receive, from the external electronic device, feedback information on the one or more sector sweep frames through a second frequency band that is different from the first frequency band. The instructions, when executed by the processor individually or collectively, may cause the electronic device to transmit a data frame to the external electronic device through the first frequency band, based on the feedback information. The instructions, when executed by the processor individually or collectively, may cause the electronic device to receive a data frame from the external electronic device through the second frequency band.

An operating method of an electronic device, according to an embodiment, may include transmitting, to an external electronic device performing an MLO with the electronic device, one or more sector sweep frames for beamforming, through a first frequency band corresponding to a millimeter wave wireless communication channel. The operating method of the electronic device may include receiving, from the external electronic device, feedback information on the one or more sector sweep frames through a second frequency band that is different from the first frequency band. The operating method of the electronic device may include transmitting a data frame to the external electronic device through the first frequency band, based on the feedback information. The operating method of the electronic device may include receiving a data frame from the external electronic device through the second frequency band.

An electronic device, according to an embodiment, may include a wireless communication circuit configured to transmit and receive a wireless signal. The electronic device may include a processor operatively connected to the wireless communication circuit. The electronic device may include memory storing instructions. The instructions, when executed by the processor individually or collectively, may cause the electronic device to receive, from an external electronic device performing an MLO with the electronic device, one or more sector sweep frames for beamforming, through a first frequency band corresponding to a millimeter wave wireless communication channel. The instructions, when executed by the processor individually or collectively, may cause the electronic device to transmit, to the external electronic device, feedback information on the one or more sector sweep frames through a second frequency band that is different from the first frequency band. The feedback information may be included in an aggregated control (A-control) subfield of a medium access control (MAC) header of a frame transmitted by the electronic device.

An operating method of an electronic device, according to an embodiment, may include receiving, from an external electronic device performing an MLO with the electronic device, one or more sector sweep frames for beamforming, through a first frequency band corresponding to a millimeter wave wireless communication channel. The operating method of the electronic device may include transmitting, to the external electronic device, feedback information on the one or more sector sweep frames through a second frequency band that is different from the first frequency band. The feedback information may be included in an A-control subfield of a MAC header of a frame transmitted by the electronic device.

An electronic device, according to an embodiment, may include a wireless communication circuit configured to transmit and receive a wireless signal. The electronic device may include a processor operatively connected to the wireless communication circuit. The electronic device may include one or more memories storing instructions. The instructions, when executed by the processor individually or collectively, may cause the electronic device to transmit, to an external electronic device performing an MLO with the electronic device, one or more sector sweep frames for beamforming, through a first frequency band corresponding to a millimeter wave wireless communication channel. The instructions, when executed by the processor individually or collectively, may cause the electronic device to receive, from the external electronic device, feedback information on the one or more sector sweep frames through a second frequency band that is different from the first frequency band. A MAC header of the one or more sector sweep frames may include information indicating that feedback for the one or more sector sweep frames is to be transmitted through the second frequency band.

An operating method of an electronic device, according to an embodiment, may include transmitting, to an external electronic device performing an MLO with the electronic device, one or more sector sweep frames for beamforming, through a first frequency band corresponding to a millimeter wave wireless communication channel. The operating method of the electronic device may include receiving, from the external electronic device, feedback information on the one or more sector sweep frames through a second frequency band that is different from the first frequency band. A MAC header of the one or more sector sweep frames may include information indicating that feedback for the one or more sector sweep frames is to be transmitted through the second frequency band.

### BRIEF DESCRIPTION OF DRAWINGS

FIGS. 1 and 2 are diagrams illustrating a wireless local area network (WLAN) system according to an embodiment.
FIG. 3 is a diagram illustrating a link setup operation according to an embodiment.
FIG. 4 is a diagram illustrating a multi-link device (MLD) according to an embodiment.
FIG. 5 is a diagram illustrating a multi-link operation (MLO) according to an embodiment.
FIG. 6 is a diagram illustrating a sector sweep of beamforming training.
FIG. 7 is a diagram illustrating an asymmetry between beamforming capabilities.
FIG. 8 is a diagram illustrating an asymmetry between sector sweep coverages.
FIG. 9 is a diagram illustrating a method of utilizing a millimeter wave frequency band based on an MLO, according to an embodiment.
FIG. 10 is a schematic block diagram of an access point (AP) MLD, according to an embodiment.
FIG. 11 is a schematic block diagram of a non-AP MLD, according to an embodiment.
FIG. 12 is a diagram illustrating a sector sweep based on an MLO, according to an embodiment.
FIG. 13 is a diagram illustrating an operation of directional-selectively utilizing a millimeter wave link, according to an embodiment.
FIG. 14 is a diagram illustrating a sector sweep based on an MLO, according to an embodiment.
FIG. 15 is a diagram illustrating an aggregated control (A-control) subfield of a medium access control (MAC) header, according to an embodiment.
FIGS. 16 and 17 are flowcharts illustrating an operating method of an electronic device, according to an embodiment.
FIG. 18 is a block diagram illustrating an electronic device in a network environment, according to an embodiment.

### BEST MODE FOR CARRYING OUT THE INVENTION

Hereinafter, embodiments will be described in detail with reference to the accompanying drawings. When describing the embodiments with reference to the accompanying drawings, like reference numerals refer to like elements and a repeated description related thereto will be omitted.

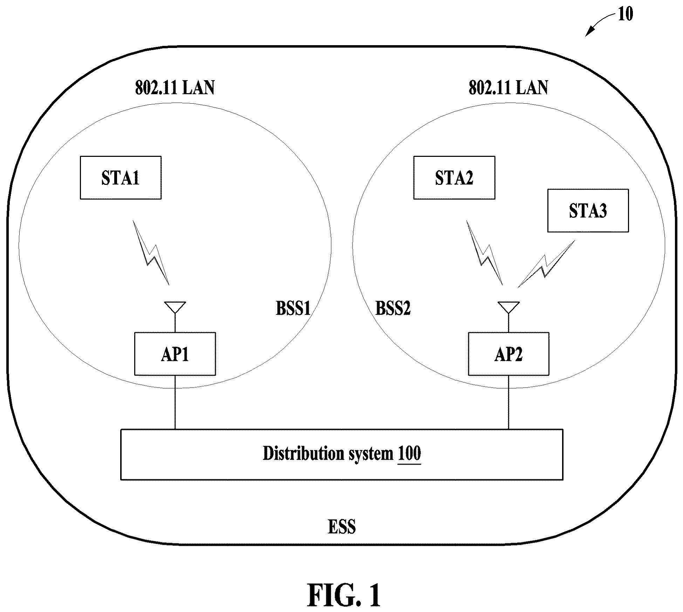

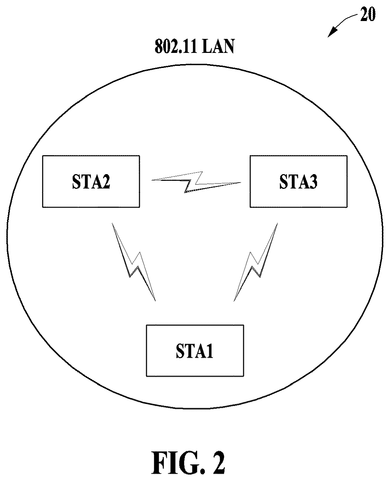

FIGS. 1 and 2 are diagrams illustrating a wireless local area network (WLAN) system according to an embodiment.

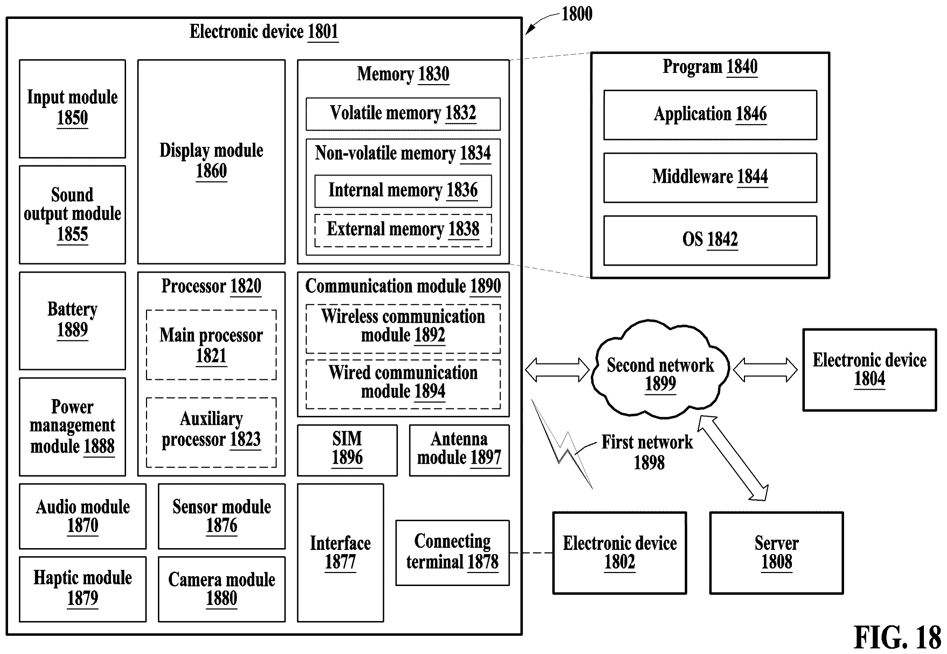

Referring to FIG. 1, according to an embodiment, a WLAN system 10 may refer to an infrastructure mode in which an access point (AP) is present in a structure of a WLAN of the Institute of Electrical and Electronics Engineers (IEEE) 802.11 standard. The WLAN system 10 may include one or more basic service sets (BSSs) (e.g., BSS1 and BSS2). The BSS (e.g., BSS1 or BSS2) may refer to a set of APs (e.g., an electronic device 1802 and an electronic device 1804 of FIG. 18) and stations (STAs) (e.g., an electronic device 1801 of FIG. 18) that may communicate with each other with successful synchronization. The BSS1 may include an AP1 and an STA1, and the BSS2 may include an AP2, an STA2, and an STA3.

According to an embodiment, the WLAN system 10 may include at least one STA(e.g., STA1 to STA3), a plurality ofAPs (e.g., AP1 and AP2) providing a distribution service, and a distribution system 100 connecting the plurality of APs (e.g., AP1 and AP2). The distribution system 100 may implement an extended service set (ESS), which is a service set extended by connecting a plurality of BSSs (e.g., BSS1 and BSS2). The ESS may be used as a term referring to one network in which the plurality of APs (e.g., AP1 and AP2) is connected through the distribution system 100. The plurality of APs (e.g., AP1 and AP2) included in one ESS may have the same service set identification (SSID).

According to an embodiment, the STA (e.g., STA1 to STA3) may be an arbitrary functional medium including a medium access control (MAC) and a physical layer interface for a wireless medium that conform to the provisions of the IEEE 802.11 standard. The term "STA" (e.g., STA1 to STA3) may be used to include both an AP-STA and a non-AP STA. The STA (e.g., STA1 to STA3) may also be referred to by various names, such as an electronic device, a mobile terminal, a wireless device, a wireless transmit/receive unit (WTRU), user equipment (UE), a mobile station (MS), a mobile subscriber unit, or simply, a user.

Referring to FIG. 2, according to an embodiment, a WLAN system 20 may refer to an ad-hoc mode in which a network is established and communicated between a plurality of STAs (e.g., STA1 to STA3) without any AP in a structure of a WLAN of the IEEE 802.11 standard, as opposed to the WLAN system 10 of FIG. 1. The WLAN system 20 may include a BSS operating in an ad-hoc mode, for example, an independent basic service set (IBSS).

According to an embodiment, since the IBSS does not include an AP, there may be no centralized management entity that performs a management function at the center. In the IBSS, the STAs may be managed in a distributed manner. In the IBSS, all the STAs may be mobile STAs and may form a self-contained network (or an integrated network) because access to a distribution system is not allowed.

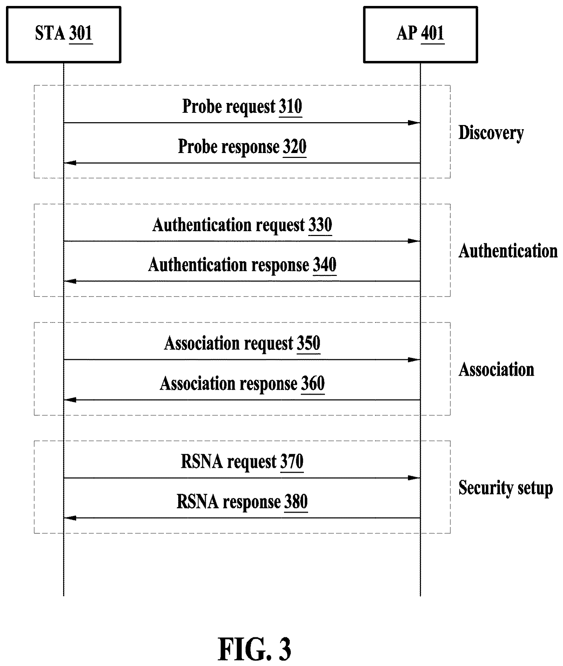

FIG. 3 is a diagram illustrating an example of a link setup operation, according to an embodiment.

Referring to FIG. 3, according to an embodiment, the link setup operation may be performed between devices (e.g., an STA 301 and an AP 401) to communicate with each other. For the link setup, operations for network discovery, execution of authentication, establishing association, and setting security may be performed. The link setup operation may be referred to as a session initiation operation or a session setup operation. Furthermore, the operations of discovery, authentication, association, and setting security of the link setup operation may be collectively referred to as an association operation.

According to an embodiment, the network discovery operation may include operations 310 and 320. In operation 310, the STA 301 (e.g., an electronic device 1801 of FIG. 18) may transmit a probe request frame to probe which AP (e.g., an electronic device 1802 or an electronic device 1804 of FIG. 18) exists and may wait for a response to the probe request frame. The STA 301 may find a network to participate in by performing a scanning operation to access the network. The probe request frame may include information of the STA 301 (e.g., a device name and/or address of the STA 301). The scanning operation in operation 310 may refer to an active scanning operation. In operation 320, the AP 401 may transmit a probe response frame to the STA 301 that transmits the probe request frame, in response to the probe request frame. The probe response frame may include information of the AP 401 (e.g., a device name and/or network information of the AP 401). Although FIG. 3 shows that the network discovery operation is performed through active scanning, the disclosure is not necessarily limited thereto. When the STA 301 performs passive scanning, the operation of transmitting the probe request frame may be omitted. The STA 301 that performs passive scanning may receive a beacon frame transmitted by the AP 401 and perform the following subsequent procedures.

According to an embodiment, after the STA 301 discovers a network, an authentication operation including operations 330 and 340 may be performed. In operation 330, the STA 301 may transmit an authentication request frame to the AP 401. In operation 340, the AP 401 may determine whether to allow authentication for the STA 301 based on information included in the authentication request frame. The AP 401 may provide the STA 301 with a result of authentication processing through an authentication response frame. The authentication frame used for the authentication request and/or response may correspond to a management frame.

According to an embodiment, the authentication frame may include information on an authentication algorithm number, an authentication transaction sequence number, status code, challenge text, a robust security network (RSN), or a finite cyclic group.

According to an embodiment, after successful authentication of the STA 301, an association operation including operations 350 and 360 may be performed. In operation 350, the STA 301 may transmit an association request frame to the AP 401. In operation 360, the AP 401 may transmit an association response frame to the STA 301 in response to the association request frame.

According to an embodiment, the association request frame and/or the association response frame may include information related to various capabilities. For example, the association request frame may include information related to various capabilities, a beacon listening interval, an SSID, supported rates, supported channels, an RSN, a mobility domain, supported operating classes, a traffic indication map (TIM) broadcast request, and/or information related to an interworking service capability. For example, the association response frame may include information related to various capabilities, status code, association ID (AID), supported rates, an enhanced distributed channel access (EDCA) parameter set, a received channel power indicator (RCPI), a received signal-to-noise indicator (RSNI), a mobility domain, a timeout interval (e.g., an association comeback time), an overlapping BSS scan parameter, a TIM broadcast response, and/or information such as a quality of service (QoS) map.

According to an embodiment, after the STA 301 is successfully associated with the network, a security setup operation including operations 370 and 380 may be performed. The security setup operation may be performed through a robust security network association (RSNA) request/response. For example, the security setup operation may include an operation of performing private key setup by means of a 4-way handshaking through an extensible authentication protocol over local area network (LAN) (EAPOL) frame. The security setup operation may be performed according to a security scheme that is not defined in the IEEE 802.11 standard.

According to an embodiment, a security session may be established between the STA 301 and the AP 401 according to the security setup operation, and the STA 301 and the AP 401 may proceed with secure data communication.

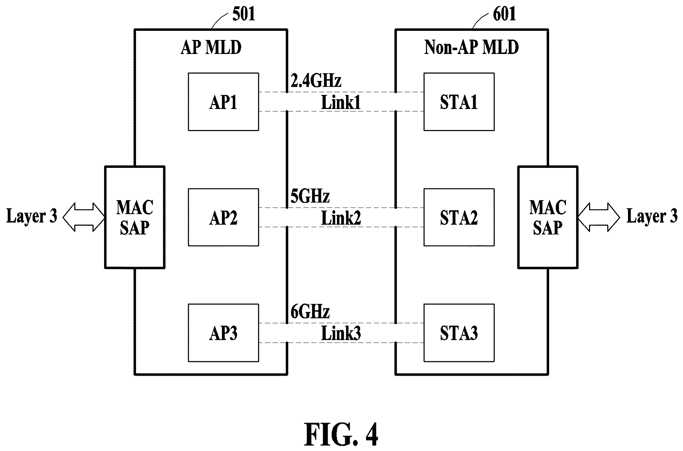

FIG. 4 is a diagram illustrating a multi-link device (MLD) according to an embodiment.

Referring to FIG. 4, according to an embodiment, an AP MLD 501 (e.g., an electronic device 1802 and an electronic device 1804 of FIG. 18) and a non-AP MLD 601 (e.g., an electronic device 1801 of FIG. 18) may perform a multi-link operation (MLO) that communicates using a plurality of individual links (e.g., link1, link2, and link3). The AP MLD 501 may be a device including one or more APs (e.g., AP1, AP2, and AP3). The AP MLD 501 may be a device connected to a logical link control (LLC) layer through one interface (e.g., a MAC service access point (SAP)). The one or more APs (e.g., AP1, AP2, and AP3) included in the AP MLD 501 may share some functions in the MAC layer. The APs in the AP MLD 501 may operate in different links (e.g., AP1 operates through link1, AP2 operates through link2, and AP3 operates through link3). Each of the APs (e.g., AP1, AP2, and AP3) in the AP MLD 501 may be in charge of a corresponding link, respectively, and may perform the role of an independent AP.

According to an embodiment, the non-AP MLD 601 may be a device including one or more non-APs (e.g., STA1, STA2, and STA3). The non-AP MLD 601 may be a device connected to an LLC layer through one interface (e.g., a MAC SAP). The one or more non-APs (e.g., STA1, STA2, and STA3) included in the non-AP MLD 601 may share some functions in the MAC layer. The STAs in the non-AP MLD 601 may operate in different links (e.g., STA1 operates through link1, STA2 operates through link2, and STA3 operates through link3). Each of the STAs (e.g., STA1, STA2, and STA3) in the non-AP MLD 601 may be in charge of a corresponding link, respectively, and may perform the role of an independent STA. The non-AP MLD may also be expressed as an STA MLD.

According to an embodiment, when the AP MLD 501 includes a plurality of APs (e.g., AP1, AP2, and AP3), each of the APs (e.g., AP1, AP2, and AP3) may form a separate link (e.g., link1, link2, and link3) and perform a frame transmission and reception operation using a plurality of links with each of the STAs (e.g., STA1, STA2, and STA3) included in the non-AP MLD 601. The links may utilize a predetermined channel (or bandwidth). For example, each link may operate in the 2.4 gigahertz (GHz), 5 GHz, or 6 GHz band.

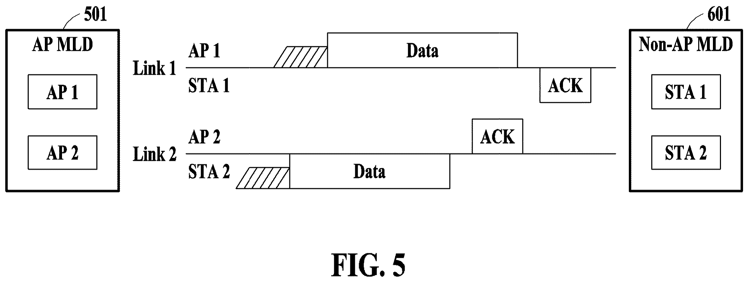

FIG. 5 is a diagram illustrating an MLO according to an embodiment.

Referring to FIG. 4, according to an embodiment, a schematic diagram illustrating communication (e.g., an MLO) between the AP MLD 501 and the non-AP MLD 601 may be identified. The AP MLD 501 and/or the non-AP MLD 601 may transmit uplink data or downlink data through the MLO. The AP MLD 501 may communicate with the non-AP MLD 601 through a plurality of links (e.g., link1 and link2). STA1 of the non-AP MLD 601 may communicate with AP1 of the AP MLD 501 through link1. STA1 of the non-AP MLD 601 may receive data from AP1 of the AP MLD 501 through link1. Link1 may be a downlink. STA2 of the non-AP MLD 601 may communicate with AP2 of the AP MLD 501 through link2. STA2 of the non-AP MLD 601 may transmit data to AP2 of the AP MLD 501 through link2. Link2 may be an uplink.

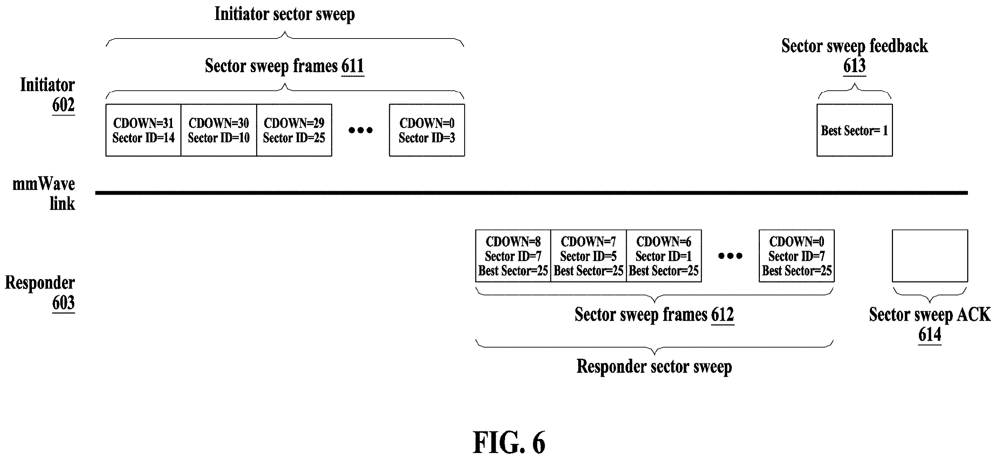

FIG. 6 is a diagram illustrating a sector sweep of beamforming training.

When electromagnetic waves propagate through a wireless medium, it is accompanied by signal attenuation that is inversely proportional to the square of a wavelength. Therefore, signals in a high-frequency band with a small wavelength have greater signal attenuation than general communication signals. Additionally, signals in the high-frequency band have the characteristics of less diffraction, stronger straightness, and lower transmittance. To use signals in the high-frequency (e.g., millimeter waves (e.g., 24 GHz)) band, a transmission end and a reception end need to match beam directions. The IEEE 802.11ad standard defines a beam training protocol to obtain the maximum beamforming gain by matching the beam directions of the transmission end and the reception end.

Referring to FIG. 6, an example of a sector sweep of beamforming for communication in the millimeter wave band may be identified. An initiator 602 may generate sector sweep frames 611. Each of the sector sweep frames 611 may be transmitted externally based on different beam directions. Different sector identifications (IDs) may be allocated to the sector sweep frames 611, respectively. The sector ID may correspond to a beam direction of a sector sweep frame. Each of the sector sweep frames 611 may be sequentially transmitted based on countdown (CDOWN). Each of the sector sweep frames 611 may be transmitted through the millimeter wave band.

A responder 603 may determine a sector sweep frame received with the strongest signal among the received sector sweep frames 611. The responder 603 may generate sector sweep frames 612 by including information (e.g., Best sector = 25) about the sector sweep frame received with the strongest signal therein. Each of the sector sweep frames 612 may be transmitted externally based on different beam directions. Different sector IDs may be allocated to the sector sweep frames 612, respectively. The sector ID may correspond to a beam direction of a sector sweep frame. Each of the sector sweep frames 612 may be sequentially transmitted based on CDOWN. Each of the sector sweep frames 612 may be transmitted through the millimeter wave band.

The initiator 602 may determine a sector sweep frame received with the strongest signal among the received sector sweep frames 612. The initiator 602 may generate sector sweep feedback 613 by including information (e.g., Best sector = 1) about the sector sweep frame received with the strongest signal therein. The initiator 602 may transmit the sector sweep feedback 613 to the responder 603. The responder 603 may transmit a sector sweep ACK 614 to the initiator 602 in response to the reception of the sector sweep feedback 613.

After receiving at least one of the sector sweep frames 612 from the responder 603, the initiator 602 may perform beamforming (e.g., determine a beam direction). After receiving the sector sweep feedback 613 from the initiator 602, the responder 603 may perform beamforming (e.g., determine a beam direction). That is, to perform beamforming, the initiator 602 and the responder 603 must normally receive a signal (e.g., a sector sweep frame) of at least one millimeter wave band from the other party. However, the normal reception of a signal of at least one millimeter wave band by the reception end may depend on the capability of the transmission end. That is, depending on how much the transmission end subdivides a beam direction (e.g., a sector) and transmits a signal, beamforming of the reception end may be affected. Forming a strong beam by subdividing the beam direction (e.g., the sector) may be determined by the number of antennas available for beamforming.

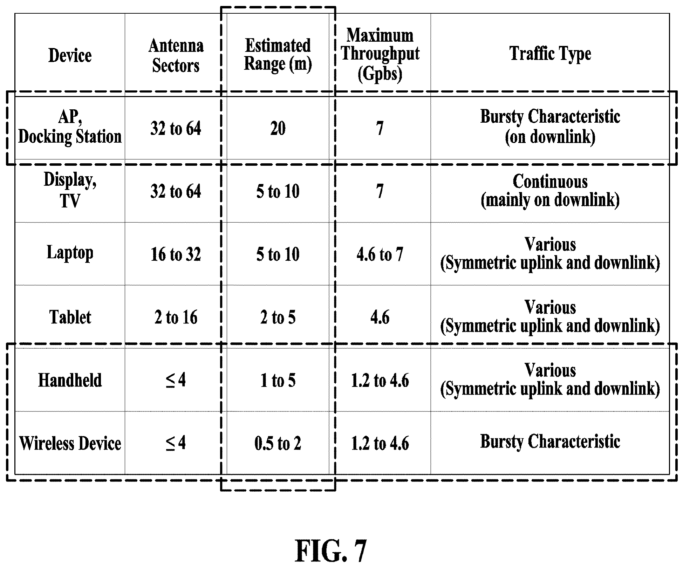

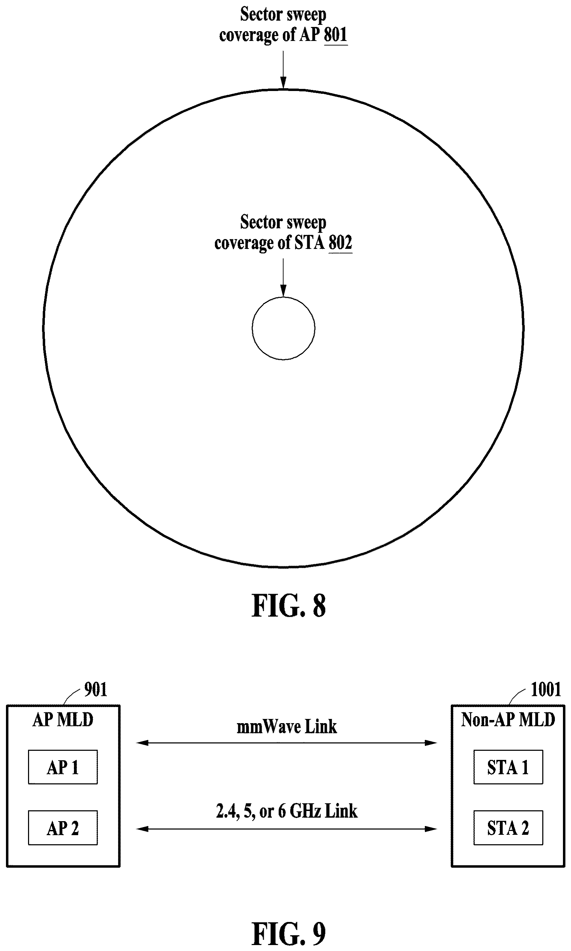

FIG. 7 is a diagram illustrating an asymmetry between beamforming capabilities, and FIG. 8 is a diagram illustrating an asymmetry between sector sweep coverages.

FIG. 7 illustrates different antenna sectors depending on the type of device. Depending on the type of device, an expected range to reach and the maximum throughput of a formed beam may also vary. An AP and docking station may include many antennas and may form a strong beam (e.g., a beam capable of reaching up to 20 m) by significantly subdividing the beam direction (e.g., from 32 to 64).

A mobile device (e.g., a handheld or wireless device) may only have a limited number of antennas due to various regulations. The mobile device (e.g., a handheld or wireless device) may limitedly subdivide the beam direction (e.g., less than 4), and the expected range to reach of a formed beam may also be small (e.g., up to 5 m).

Referring to FIG. 8, an asymmetry may also exist in a sector sweep coverage according to the asymmetry between beamforming capabilities. A sector sweep coverage 802 (e.g., a reachable range of a beam formed by an STA) of an STA (e.g., a mobile device (e.g., a handheld or wireless device)) may be smaller than a sector sweep coverage 801 (e.g., a reachable range of a beam formed by an AP) of an AP.

That is, in beamforming training for millimeter wave band communication between an AP and an STA, a sector sweep frame transmitted by the AP may be received by the STA, but a sector sweep frame transmitted by the STA may not be received by the AP. That is, the poor sector sweep coverage 802 of the STA may become a bottleneck (e.g., an obstacle) in utilizing millimeter wave band signals.

FIG. 9 is a diagram illustrating a method of utilizing a millimeter wave frequency band based on an MLO, according to an embodiment.

Referring to FIG. 9, according to an embodiment, a millimeter wave link (e.g., a frequency band of 24 GHz or higher) and a link (e.g., a frequency band of 2.4 GHz, 5 GHz, or 6 GHz) used in the MLO may be used together. The MLO is described with reference to FIGS. 4 and 5, and thus, a repeated description thereof is omitted herein.

According to an embodiment, an AP MLD 901 (e.g., the AP 401 of FIG. 3, the AP MLD 501 of FIG. 4, or an electronic device 1804 of FIG. 18) and a non-AP MLD 1001 (e.g., the STA 301 of FIG. 3, the non-AP MLD 601 of FIG. 4, or an electronic device 1801 of FIG. 18) may be connected through the millimeter wave link and the MLO link. Through the MLO link, the AP MLD 901 and the non-AP MLD 1001 may transmit and receive data to and from each other. Through the millimeter wave link, the AP MLD 901 and the non-AP MLD 1001 may transmit and receive data to and from each other, but only the AP MLD 901 may transmit data to the non-AP MLD 1001. The AP MLD 901 and the non-AP MLD 1001 may increase the usability of the millimeter wave frequency band through the MLO link.

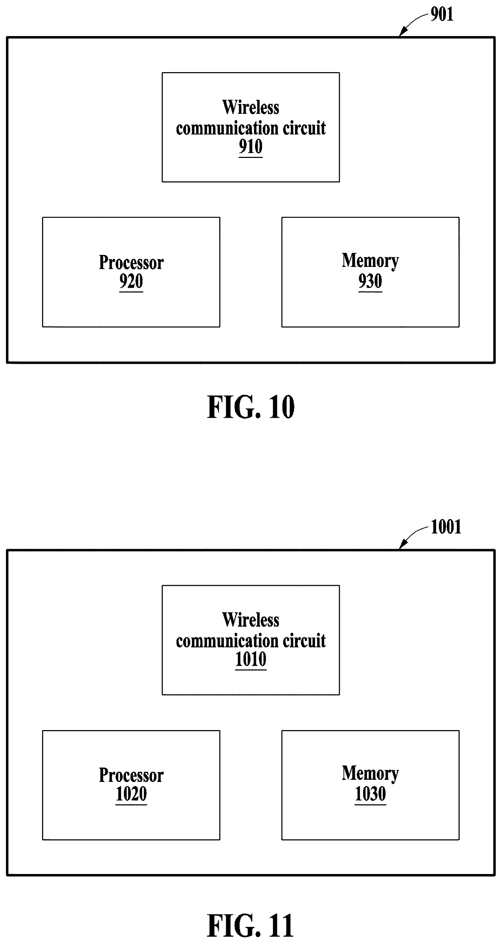

FIG. 10 is a schematic block diagram of an AP MLD, according to an embodiment.

According to an embodiment, the AP MLD 901 (e.g., the AP 401 of FIG. 3, the AP MLD 501 of FIG. 4, or an electronic device 1804 of FIG. 18) may perform MLO-based communication. The AP MLD 901 may perform millimeter wave communication. The AP MLD 901 may increase the usability of millimeter wave communication through the MLO link.

Referring to FIG. 10, according to an embodiment, the AP MLD 901 may include a wireless communication circuit 910, a processor 920, and memory 930. The wireless communication circuit 910 may be configured to transmit and receive a wireless signal. The wireless communication circuit 910 may be a wireless fidelity (Wi-Fi) chipset. The wireless communication circuit 910 may support multiple bands of 2.4 GHz, 5 GHz, and/or 6 GHz. The wireless communication circuit 910 may also support a high-frequency band of 24 GHz or higher. The processor 920 may be operatively connected to the wireless communication circuit 910. The memory 930 may be electrically connected to the processor 920 and store one or more instructions executable by the processor 920. The AP MLD 901 may correspond to an electronic device (e.g., an electronic device 1804 of FIG. 18) to be described with reference to FIG. 18. Therefore, descriptions that overlap with parts that are described with reference to FIG. 18 are omitted. The operations performed by the AP MLD 901 may include operations performed by the wireless communication circuit 910 and operations performed by the processor 920 through the wireless communication circuit 910.

According to an embodiment, the processor 920 may be implemented as a system-on-chip (SoC) or circuitry (e.g., processing circuitry) such as an integrated circuit (IC). The processor 920 may include one or more processors. For example, the processor 920 may include a combination of one or more processors, such as a central processing unit (CPU), a graphics processing unit (GPU), a microprocessor unit (MPU), an application processor (AP), and a communication processor (CP).

According to an embodiment, the memory 930 may include one or more memories. The instructions stored in the memory 930 may be stored in one memory. The instructions stored in the memory 930 may be divided and stored in a plurality of memories. The instructions stored in the memory 930 may be executed by the processor 920 individually or collectively to cause the AP MLD 901 to perform the method according to an embodiment described herein.

FIG. 11 is a schematic block diagram of a non-AP MLD, according to an embodiment.

According to an embodiment, the non-AP MLD 1001 (e.g., the STA 301 of FIG. 3, the non-AP MLD 601 of FIG. 4, or an electronic device 1801 of FIG. 18) may perform MLO-based communication. The non-AP MLD 1001 may perform millimeter wave communication. The non-AP MLD 1001 may increase the usability of millimeter wave communication through an MLO link.

Referring to FIG. 11, according to an embodiment, the non-AP MLD 1001 may include a wireless communication circuit 1010 (e.g., a wireless communication module 1892 of FIG. 18), a processor 1020 (e.g., a processor 1820 of FIG. 18), and memory 1030 (e.g., memory 1830 of FIG. 18). The wireless communication circuit 1010 may be configured to transmit and receive a wireless signal. The wireless communication circuit 1010 may be a Wi-Fi chipset. The wireless communication circuit 1010 may support multiple bands of 2.4 GHz, 5 GHz, and/or 6 GHz. The wireless communication circuit 1010 may also support a high-frequency band of 24 GHz or higher. The processor 1020 may be operatively connected to the wireless communication circuit 1010. The memory 1030 may be electrically connected to the processor 1020 and store one or more instructions executable by the processor 1020. An electronic device 1001 may correspond to an electronic device (e.g., an electronic device 1801 of FIG. 18) to be described with reference to FIG. 18. Therefore, descriptions that overlap with parts that are described with reference to FIG. 18 are omitted. The operations performed by the electronic device 1001 may include operations performed by a wireless communication circuit (e.g., the wireless communication circuit 1010 of FIG. 10 or a wireless communication module 1892 of FIG. 18) and operations performed by a processor (e.g., the processor 1020 of FIG. 10 or a processor 1820 of FIG. 18) through the wireless communication circuit.

According to an embodiment, the processor 1020 may be implemented as an SoC or circuitry (e.g., processing circuitry) such as an IC. The processor 920 may include one or more processors. For example, the processor 1020 may include a combination of one or more processors, such as a CPU, a GPU, an MPU, an AP, and a CP.

According to an embodiment, the memory 1030 may include one or more memories. The instructions stored in the memory 1030 may be stored in one memory. The instructions stored in the memory 1030 may be divided and stored in a plurality of memories. The instructions stored in the memory 1030 may be executed by the processor 920 individually or collectively to cause the non-AP MLD 1001 to perform the method according to an embodiment described herein.

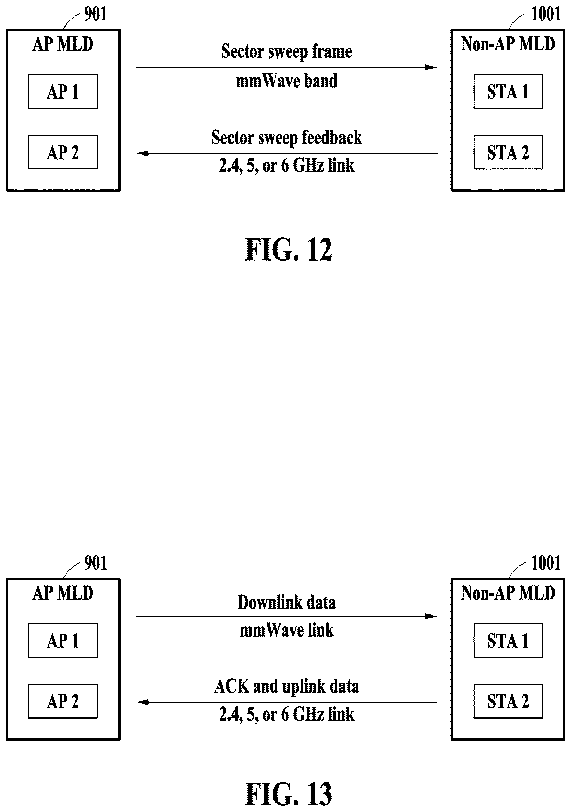

FIG. 12 is a diagram illustrating a sector sweep based on an MLO, according to an embodiment.

Referring to FIG. 12, according to an embodiment, it may be seen that an MLO is utilized (e.g., links in the 2.4 GHz, 5 GHz, or 6 GHz frequency band are utilized) for a sector sweep. The AP MLD 901 (e.g., the AP 401 of FIG. 3, the AP MLD 501 of FIG. 4, or an electronic device 1804 of FIG. 18) and the non-AP MLD 1001 (e.g., the STA 301 of FIG. 3, the non-AP MLD 601 of FIG. 4, or an electronic device 1801 of FIG. 18) may be connected through an MLO link.

According to an embodiment, the AP MLD 901 may transmit, to the non-AP MLD 1001, one or more sector sweep frames for beamforming, through a first frequency band (e.g., a millimeter wave band) (e.g., a frequency band of 24 GHz or higher) corresponding to a millimeter wave wireless communication channel.

According to an embodiment, the non-AP MLD 1001 may determine a sector sweep frame received with the strongest signal among the one or more sector sweep frames. The non-AP MLD 1001 may include information (e.g., sector ID) on the sector sweep frame received with the strongest signal in sector sweep feedback. The information (e.g., sector ID) on the sector sweep frame received with the strongest signal may be included in an aggregated control (A-control) subfield of a MAC header of the sector sweep feedback. The non-AP MLD 1001 may determine a frequency band through which the sector sweep feedback is to be transmitted. The MAC header of the sector sweep frame transmitted by the AP MLD 901 may include information indicating that feedback is to be transmitted through a second frequency band (e.g., a second frequency band that is different from a first frequency band) (e.g., a 2.4 GHz, 5 GHz, or 6 GHz frequency band).

According to an embodiment, the non-AP MLD 1001 may transmit the sector sweep feedback to the AP MLD 901 through the MLO link (e.g., a second frequency band that is different from a first frequency band) (e.g., a 2.4 GHz, 5 GHz, or 6 GHz frequency band).

According to an embodiment, the AP MLD 901 may receive the sector sweep feedback from the non-AP MLD 1001. The AP MLD 901 may determine a beam direction (e.g., perform beamforming) based on feedback information (e.g., sector ID of the sector sweep frame received with the strongest signal) included in the sector sweep feedback.

FIG. 13 is a diagram illustrating an operation of directional-selectively utilizing a millimeter wave link, according to an embodiment.

Referring to FIG. 13, according to an embodiment, the AP MLD 901 (e.g., the AP 401 of FIG. 3, the AP MLD 501 of FIG. 4, or an electronic device 1804 of FIG. 18) that receives sector sweep feedback may be connected to the non-AP MLD 1001 (e.g., the STA 301 of FIG. 3, the non-AP MLD 601 of FIG. 4, or an electronic device 1801 of FIG. 18) through a millimeter wave link.

According to an embodiment, the AP MLD 901 may transmit a data frame (e.g., downlink data) to the non-AP MLD 1001 through a first frequency band (e.g., a frequency band of a millimeter wave link) (e.g., a frequency band of 24 GHz or higher).

According to an embodiment, the non-AP MLD 1001 may transmit a data frame (e.g., uplink data) to the AP MLD 901 through a second frequency band (e.g., a frequency band of an MLO link) (e.g., a 2.4 GHz, 5 GHz, or 6 GHz frequency band). That is, the millimeter wave link may be used directional-selectively. The non-AP MLD 1001 may also transmit an acknowledgment (e.g., ack) for downlink data through the second frequency band. When information indicating to perform feedback through the second frequency band is included in the downlink data, the non-AP MLD 1001 may utilize the second frequency band.

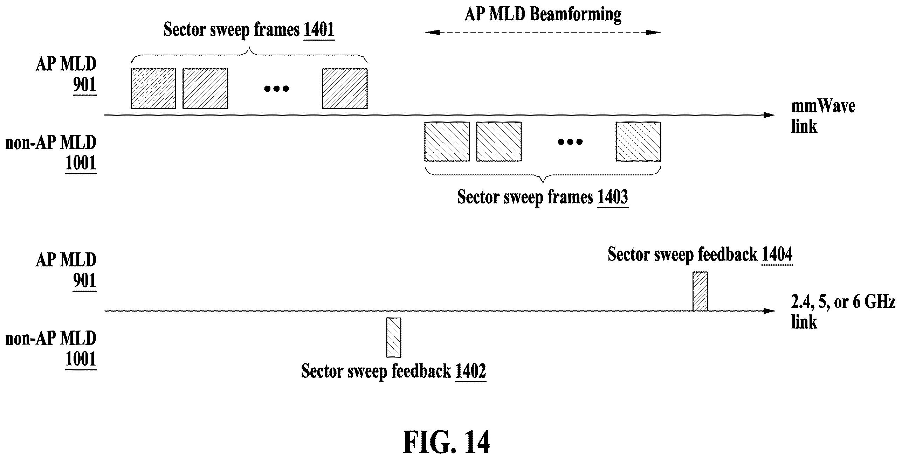

According to an embodiment, the non-AP MLD 1001 may also perform a sector sweep through the first frequency band, which is described below with reference to FIG. 14.

FIG. 14 is a diagram illustrating a sector sweep based on an MLO, according to an embodiment.

Referring to FIG. 14, according to an embodiment, the non-AP MLD 1001 (e.g., the STA 301 of FIG. 3, the non-AP MLD 601 of FIG. 4, or an electronic device 1801 of FIG. 18) may also perform a sector sweep.

According to an embodiment, the AP MLD 901 (e.g., the AP 401 of FIG. 3, the AP MLD 501 of FIG. 4, or an electronic device 1804 of FIG. 18) may generate sector sweep frames 1401. Each of the sector sweep frames 1401 may be transmitted externally based on different beam directions. Different sector IDs may be allocated to the sector sweep frames 1401, respectively. The sector ID may correspond to a beam direction of a sector sweep frame. Each of the sector sweep frames 1401 may be transmitted through a first frequency band (e.g., a frequency band of a millimeter wave link) (e.g., a frequency band of 24 GHz or higher).

According to an embodiment, the non-AP MLD 1001 may determine a sector sweep frame received with the strongest signal among the received sector sweep frames 1401. The non-AP MLD 1001 may generate sector sweep feedback 1402 including information (e.g., sector ID) on the sector sweep frame received with the strongest signal. The non-AP MLD 1001 may transmit the sector sweep feedback 1402 to the AP MLD 901 through a second frequency band (e.g., a frequency band of an MLO link) (e.g., a 2.4 GHz, 5 GHz, or 6 GHz frequency band).

According to an embodiment, after the non-AP MLD 1001 transmits the sector sweep feedback through the second frequency band (e.g., a frequency band of an MLO link) (e.g., a 2.4 GHz, 5 GHz, or 6 GHz frequency band), the non-AP MLD 1001 may transmit sector sweep frames 1403 through the first frequency band (e.g., a frequency band of a millimeter wave link) (e.g., a frequency band of 24 GHz or higher).

According to an embodiment, the AP MLD 901 (e.g., the AP 401 of FIG. 3, the AP MLD 501 of FIG. 4, or an electronic device 1804 of FIG. 18) may perform reception beamforming in advance based on feedback information (e.g., sector ID of the sector sweep frame received with the strongest signal) included in the sector sweep feedback. As the AP MLD 901 performs reception beamforming in advance, the reception probability of the sector sweep frames 1403 transmitted by the non-AP MLD 1001 may be further increased.

According to an embodiment, the AP MLD 901 may transmit sector sweep feedback 1404 through the second frequency band in response to the sector sweep frames 1403. However, embodiments are not limited thereto, and the AP MLD 901 may also transmit the sector sweep feedback 1404 through the first frequency band. Each device may set a frequency band through which feedback corresponding to a frame transmitted by each device is to be transmitted, depending on the situation. This ack policy may be included (e.g., embedded) in a MAC header of the frame.

Hereinafter, the feedback information (e.g., information on the sector sweep frame received with the strongest signal among sector sweep frames) included in the MAC header of the frame is described first.

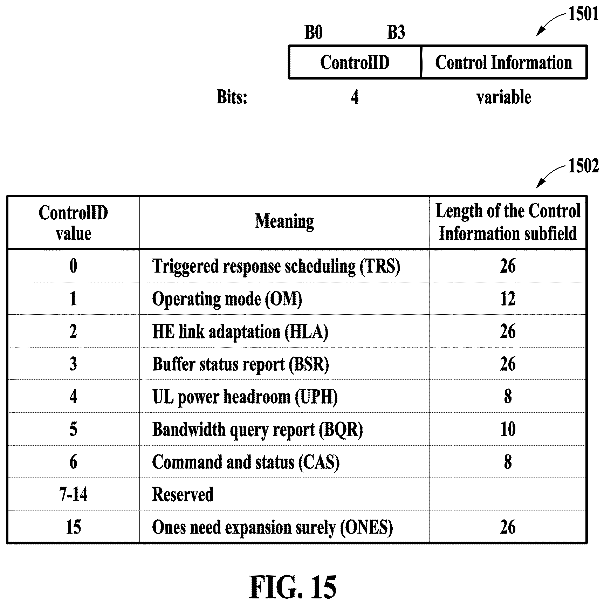

FIG. 15 is a diagram illustrating an A-control subfield of a MAC header, according to an embodiment.

Referring to FIG. 15, according to an embodiment, an A-control subfield 1501 and a table 1502 indicating information that may be stored in the A-control subfield 1501 may be identified.

According to an embodiment, feedback information (e.g., information on a sector sweep frame received with the strongest signal among sector sweep frames) may be included (e.g., embedded) in a MAC header of a frame. The feedback information may be included in the A-control subfield 1501 of the MAC header.

According to an embodiment, the A-control subfield 1501 may include various pieces of information. The A-control subfield 1501 may include different pieces of information depending on a control ID value. A control information subfield of the A-control subfield 1501 may have a different number of bits depending on the control ID value. For example, when the control ID value corresponds to 4, the control information subfield may be configured with 8 bits and may include information on uplink power headroom.

According to an embodiment, a new control ID may be defined for including the feedback information in the MAC header. In a control information subfield corresponding to the new control ID, an optimal field for transmitting the feedback information (e.g., sector ID) may be defined. By utilizing the A-control subfield 1501, a new frame may not be needed to be generated for transmitting the feedback information based on a second frequency band (e.g., a frequency band of an MLO link) (e.g., a 2.4 GHz, 5 GHz, or 6 GHz frequency band). Efficiency may be maximized by utilizing extra resources included in an existing frame without generating a new frame. However, the feedback information is not limited to being embedded in the new A-control subfield 1501 and may also be included in a new action frame.

According to an embodiment, the MAC header may include information indicating that feedback for the frame is to be transmitted through a second frequency band. The information indicating that feedback for the frame is to be transmitted through a frequency band used in an MLO may be included in an ack policy indicator subfield of the MAC header.

According to an embodiment, the ack policy indicator subfield may include information on ack policies. The ack policy may include normal Ack, an implicit block ACK request (BAR), no Ack, no explicit Ack, power save multi-poll (PSMP) Ack, and block Ack.

According to an embodiment, the ack policy may further include MLO ACK. The MLO ACK may be a policy indicating that feedback for the frame is to be transmitted through the second frequency band (e.g., a frequency band of an MLO link) (e.g., a 2.4 GHz, 5 GHz, or 6 GHz frequency band). A default ack policy of a device (e.g., an AP MLD) that simultaneously utilizes an MLO link and a millimeter wave link may be MLO ACK. However, when a sector sweep frame is normally received from an external electronic device (e.g., a non-AP MLD), the device (e.g., an AP MLD) may change the ack policy of the frame transmitted by the device.

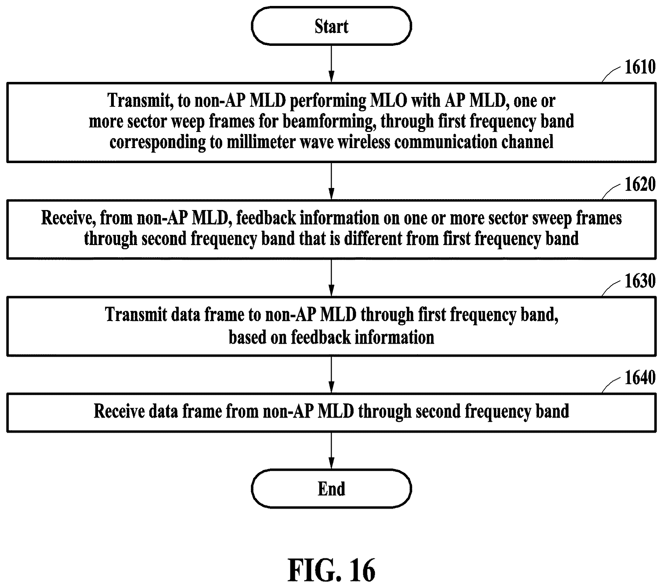

FIG. 16 is a flowchart of an operating method of an AP MLD, according to an embodiment.

Referring to FIG. 16, according to an embodiment, operations 1610 to 1630 may be performed sequentially but not necessarily. For example, the order of operations 1610 to 1630 may be changed, and at least two of operations 1610 to 1630 may be performed in parallel.

According to an embodiment, in operation 1610, an AP MLD (e.g., the AP 401 of FIG. 3, the AP MLD 501 of FIG. 4, the AP MLD 901 of FIG. 9, or an electronic device 1804 of FIG. 18) may transmit, to a non-AP MLD (e.g., the STA 301 of FIG. 3, the non-AP MLD 601 of FIG. 4, the non-AP MLD 1001 of FIG. 9, or an electronic device 1801 of FIG. 18) performing an MLO with an electronic device, one or more sector weep frames for beamforming, through a first frequency band corresponding to a millimeter wave wireless communication channel. The operations performed by the AP MLD may include operations performed by a wireless communication circuit (e.g., the wireless communication circuit 910 of FIG. 10) and operations performed by a processor (e.g., the processor 920 of FIG. 10) through the wireless communication circuit.

According to an embodiment, in operation 1620, the AP MLD may receive, from the non-AP MLD, feedback information on the one or more sector sweep frames through a second frequency band that is different from the first frequency band.

According to an embodiment, in operation 1630, the AP MLD may transmit a data frame to the non-AP MLD through the first frequency band, based on the feedback information.

According to an embodiment, in operation 1640, the AP MLD may receive a data frame from the non-AP MLD through the second frequency band. The AP MLD may also receive an acknowledgment for the data frame through the first frequency band.

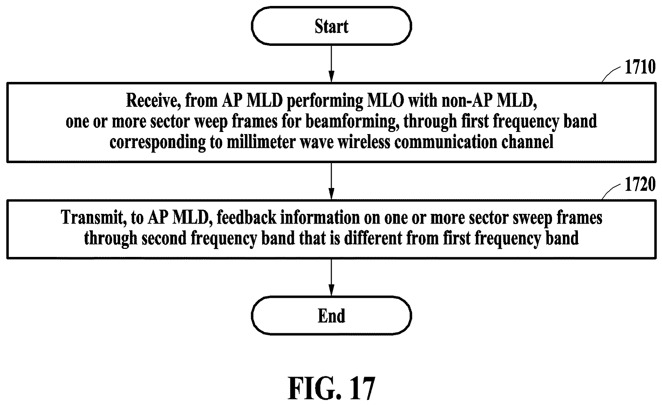

FIG. 17 is a flowchart of an operating method of a non-AP MLD, according to an embodiment.

Referring to FIG. 17, according to an embodiment, operations 1710 and 1720 may be performed sequentially but not necessarily. For example, the order of operations 1710 and 1720 may be changed, and two operations may be performed in parallel.

According to an embodiment, in operation 1710, a non-AP MLD (e.g., the STA 301 of FIG. 3, the non-AP MLD 601 of FIG. 4, the non-AP MLD 1001 of FIG. 9, or an electronic device 1801 of FIG. 18) may receive, from an AP MLD (e.g., the AP 401 of FIG. 3, the AP MLD 501 of FIG. 4, the AP MLD 901 of FIG. 9, or an electronic device 1804 of FIG. 18) performing an MLO with the non-AP MLD, one or more sector weep frames for beamforming, through a first frequency band corresponding to a millimeter wave wireless communication channel. The operations performed by the non-AP MLD may include operations performed by a wireless communication circuit (e.g., the wireless communication circuit 1010 of FIG. 11 or the wireless communication module 1892 of FIG. 18) and operations performed by a processor (e.g., the processor 1020 of FIG. 11 or the processor 1820 of FIG. 18) through the wireless communication circuit.

According to an embodiment, in operation 1720, the non-AP MLD may transmit, to the AP MLD, feedback information on the one or more sector sweep frames through a second frequency band that is different from the first frequency band. The feedback information may be included in an A-control subfield of a MAC header of a frame transmitted by the non-AP MLD.

FIG. 18 is a block diagram illustrating an electronic device in a network environment, according to an embodiment.

Referring to FIG. 18, an electronic device 1801 in a network environment 1800 may communicate with an electronic device 1802 via a first network 1898 (e.g., a short-range wireless communication network), or at least one of an electronic device 1804 or a server 1808 via a second network 1899 (e.g., a long-range wireless communication network). According to an embodiment, the electronic device 1801 may communicate with the electronic device 1804 via the server 1808. According to an embodiment, the electronic device 1801 may include a processor 1820, memory 1830, an input module 1850, a sound output module 1855, a display module 1860, an audio module 1870, a sensor module 1876, an interface 1877, a connecting terminal 1878, a haptic module 1879, a camera module 1880, a power management module 1888, a battery 1889, a communication module 1890, a subscriber identification module (SIM) 1896, or an antenna module 1897. In some embodiments, at least one of the components (e.g., the connecting terminal 1878) may be omitted from the electronic device 1801, or one or more other components may be added to the electronic device 1801. In some embodiments, some of the components (e.g., the sensor module 1876, the camera module 1880, or the antenna module 1897) may be implemented as a single component (e.g., the display module 1860).

The processor 1820 may execute, for example, software (e.g., a program 1840) to control at least one other component (e.g., a hardware or software component) of the electronic device 1801 coupled with the processor 1820, and may perform various data processing or computation. According to an embodiment, as at least part of the data processing or computation, the processor 1820 may store a command or data received from another component (e.g., the sensor module 1876 or the communication module 1890) in volatile memory 1832, process the command or the data stored in the volatile memory 1832, and store resulting data in non-volatile memory 1834. According to an embodiment, the processor 1820 may include a main processor 1821 (e.g., a CPU or an AP), or an auxiliary processor 1821 (e.g., a GPU, a neural processing unit (NPU), an image signal processor (ISP), a sensor hub processor, or a CP) that is operable independently from, or in conjunction with, the main processor 1821. For example, when the electronic device 1801 includes the main processor 1821 and the auxiliary processor 1823, the auxiliary processor 1823 may be adapted to consume less power than the main processor 1821, or to be specific to a specified function. The auxiliary processor 1823 may be implemented as separate from, or as part of the main processor 1821.

The auxiliary processor 1823 may control at least some of functions or states related to at least one component (e.g., the display module 1860, the sensor module 1876, or the communication module 1890) among the components of the electronic device 1801, instead of the main processor 1821 while the main processor 1821 is in an inactive (e.g., sleep) state, or together with the main processor 1821 while the main processor 1821 is in an active state (e.g., executing an application). According to an embodiment, the auxiliary processor 1823 (e.g., an ISP or a CP) may be implemented as part of another component (e.g., the camera module 1880 or the communication module 1890) functionally related to the auxiliary processor 1823. According to an embodiment, the auxiliary processor 1823 (e.g., the neural processing unit) may include a hardware structure specified for artificial intelligence model processing. An artificial intelligence model may be generated by machine learning. Such learning may be performed, e.g., by the electronic device 1801 where the artificial intelligence is performed or via a separate server (e.g., the server 1808). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 1830 may store various data used by at least one component (e.g., the processor 1820 or the sensor module 1876) of the electronic device 1801. The various data may include, for example, software (e.g., the program 1840) and input data or output data for a command related thereto. The memory 1830 may include the volatile memory 1832 or the non-volatile memory 1834.

The program 1840 may be stored in the memory 1830 as software, and may include, for example, an operating system (OS) 1842, middleware 1844, or an application 1846.

The input module 1850 may receive a command or data to be used by another component (e.g., the processor 1820) of the electronic device 1801, from the outside (e.g., a user) of the electronic device 1801. The input module 1850 may include, for example, a microphone, a mouse, a keyboard, a key (e.g., a button), or a digital pen (e.g., a stylus pen).

The sound output module 1855 may output sound signals to the outside of the electronic device 1801. The sound output module 1855 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1860 may visually provide information to the outside (e.g., a user) of the electronic device 1801. The display module 1860 may include, for example, a display, a hologram device, or a projector and control circuitry to control a corresponding one of the display, hologram device, and projector. According to an embodiment, the display module 1860 may include a touch sensor adapted to detect a touch, or a pressure sensor adapted to measure the intensity of force incurred by the touch.

The audio module 1870 may convert a sound into an electrical signal and vice versa. According to an embodiment, the audio module 1870 may obtain the sound via the input module 1850 or output the sound via the sound output module 1855 or an external electronic device (e.g., the electronic device 1802) (e.g., a speaker or headphone) directly or wirelessly coupled with the electronic device 1801.

The sensor module 1876 may detect an operational state (e.g., power or temperature) of the electronic device 1801 or an environmental state (e.g., a state of a user) external to the electronic device 1801, and then generate an electrical signal or data value corresponding to the detected state. According to an embodiment, the sensor module 1876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1877 may support one or more specified protocols to be used for the electronic device 1801 to be coupled with the external electronic device (e.g., the electronic device 1802) directly (e.g., wiredly) or wirelessly. According to an embodiment, the interface 1877 may include, for example, a high definition multimedia interface (HDMI), a universal serial bus (USB) interface, a secure digital (SD) card interface, or an audio interface.

The connecting terminal 1878 may include a connector via which the electronic device 1801 may be physically connected with the external electronic device (e.g., the electronic device 1802). According to an embodiment, the connecting terminal 1878 may include, for example, an HDMI connector, a USB connector, an SD card connector, or an audio connector (e.g., a headphone connector).

The haptic module 1879 may convert an electrical signal into a mechanical stimulus (e.g., a vibration or a movement) or electrical stimulus which may be recognized by a user via his tactile sensation or kinesthetic sensation. According to an embodiment, the haptic module 1879 may include, for example, a motor, a piezoelectric element, or an electric stimulator.

The camera module 1880 may capture a still image or moving images. According to an embodiment, the camera module 1880 may include one or more lenses, image sensors, ISPs, or flashes.

The power management module 1888 may manage power supplied to the electronic device 1801. According to an embodiment, the power management module 1888 may be implemented as at least part of, for example, a power management integrated circuit (PMIC).

The battery 1889 may supply power to at least one component of the electronic device 1801. According to an embodiment, the battery 1889 may include, for example, a primary cell which is not rechargeable, a secondary cell which is rechargeable, or a fuel cell.

The communication module 1890 may support establishing a direct (e.g., wired) communication channel or a wireless communication channel between the electronic device 1801 and the external electronic device (e.g., the electronic device 1802, the electronic device 1804, or the server 1808) and performing communication via the established communication channel. The communication module 1890 may include one or more CPs that are operable independently from the processor 1820 (e.g., the AP) and support a direct (e.g., wired) communication or a wireless communication. According to an embodiment, the communication module 1890 may include a wireless communication module 1892 (e.g., a cellular communication module, a short-range wireless communication module, or a global navigation satellite system (GNSS) communication module) or a wired communication module 1894 (e.g., a local area network (LAN) communication module or a power line communication (PLC) module). A corresponding one of these communication modules may communicate with the external electronic device 1804 via the first network 1898 (e.g., a short-range communication network, such as Bluetooth^{™}, wireless-fidelity (Wi-Fi) direct, or infrared data association (IrDA)) or the second network 1899 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 1892 may identify and authenticate the electronic device 1801 in a communication network, such as the first network 1898 or the second network 1899, using subscriber information (e.g., international mobile subscriber identity (IMSI)) stored in the subscriber identification module 1896.

The wireless communication module 1892 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1892 may support a high-frequency band (e.g., the mmWave band) to achieve, e.g., a high data transmission rate. The wireless communication module 1892 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1892 may support various requirements specified in the electronic device 1801, an external electronic device (e.g., the electronic device 1804), or a network system (e.g., the second network 1899). According to an embodiment, the wireless communication module 1892 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 1897 may transmit or receive a signal or power to or from the outside (e.g., the external electronic device) of the electronic device 1801. According to an embodiment, the antenna module 1897 may include an antenna including a radiating element composed of a conductive material or a conductive pattern formed in or on a substrate (e.g., a printed circuit board (PCB)). According to an embodiment, the antenna module 1897 may include a plurality of antennas (e.g., array antennas). In such a case, at least one antenna appropriate for a communication scheme used in the communication network, such as the first network 1898 or the second network 1899, may be selected, for example, by the communication module 1890 from the plurality of antennas. The signal or the power may then be transmitted or received between the communication module 1890 and the external electronic device via the selected at least one antenna. According to an embodiment, another component (e.g., a radio frequency integrated circuit (RFIC)) other than the radiating element may be additionally formed as part of the antenna module 1897.

According to various embodiments, the antenna module 1897 may form a mmWave antenna module. According to an embodiment, the mmWave antenna module may include a PCB, a RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1801 and the external electronic device 1804 via the server 1808 coupled with the second network 1899. Each of the electronic devices 1802 or 1804 may be a device of a same type as, or a different type, from the electronic device 1801. According to an embodiment, all or some of operations to be executed at the electronic device 1801 may be executed at one or more of the external electronic devices 1802, 1804, or 1808. For example, if the electronic device 1801 should perform a function or a service automatically, or in response to a request from a user or another device, the electronic device 1801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1801. The electronic device 1801 may provide the outcome, with or without further processing of the outcome, as at least part of a reply to the request. To that end, cloud computing, distributed computing, mobile edge computing (MEC), or client-server computing technology may be used, for example. The electronic device 1801 may provide ultra low-latency services using, e.g., distributed computing or mobile edge computing. In another embodiment, the external electronic device 1804 may include an Internet-of-Things (IoT) device. The server 1808 may be an intelligent server using machine learning and/or a neural network. According to an embodiment, the external electronic device 1804 or the server 1808 may be included in the second network 1899. The electronic device 1801 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1840) including one or more instructions that are stored in a storage medium (e.g., internal memory 1836 or external memory 1838) that is readable by a machine (e.g., the electronic device 1801). For example, a processor (e.g., the processor 1820) of the machine (e.g., the electronic device 1801) may invoke at least one of the one or more instructions stored in the storage medium, and execute it, with or without using one or more other components under the control of the processor. This allows the machine to be operated to perform at least one function according to the at least one instruction invoked. The one or more instructions may include code generated by a complier or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

An electronic device (e.g., the AP 401 of FIG. 3, the AP MLD 501 of FIG. 4, the AP MLD 901 of FIG. 9, or the electronic device 1804 of FIG. 18), according to an embodiment, may include a wireless communication circuit (e.g., the wireless communication circuit 910 of FIG. 10) configured to transmit and receive a wireless signal. The electronic device may include a processor (e.g., the processor 920 of FIG. 10) operatively connected to the wireless communication circuit. The electronic device may include memory (e.g., the memory 930 of FIG. 10) storing instructions. The instructions, when executed by the processor individually or collectively, may cause the electronic device to transmit, to an external electronic device performing an MLO with the electronic device, one or more sector weep frames for beamforming, through a first frequency band corresponding to a millimeter wave wireless communication channel. The instructions, when executed by the processor individually or collectively, may cause the electronic device to receive, from the external electronic device, feedback information on the one or more sector sweep frames through a second frequency band that is different from the first frequency band. The instructions, when executed by the processor individually or collectively, may cause the electronic device to transmit a data frame to the external electronic device through the first frequency band, based on the feedback information. The instructions, when executed by the processor individually or collectively, may cause the electronic device to receive a data frame from the external electronic device through the second frequency band.

According to an embodiment, the second frequency band may correspond to at least one of frequency bands used in the MLO.

According to an embodiment, the feedback information may include information on a sector sweep frame received with the strongest signal among the one or more sector sweep frames.

According to an embodiment, the instructions, when executed by the processor individually or collectively, may cause the electronic device to determine a beam direction based on the feedback information. The instructions, when executed by the processor individually or collectively, may cause the electronic device to transmit a data frame to the external electronic device through the first frequency band, based on the beam direction.

According to an embodiment, the feedback information may be included in an A-control subfield of a MAC header of a frame transmitted by the external electronic device.

According to an embodiment, the MAC header of the frame transmitted by the electronic device may include information indicating that feedback for the frame is to be transmitted through the second frequency band.

According to an embodiment, the external electronic device may be configured to transmit the one or more sector sweep frames to the electronic device. The instructions, when executed by the processor individually or collectively, may cause the electronic device to determine a beam direction for receiving a sector sweep frame from the external electronic device, based on the feedback information.

According to an embodiment, the instructions, when executed by the processor individually or collectively, may cause the electronic device to change an ack policy of the frame transmitted by the electronic device when a sector sweep frame is received from the external electronic device.

According to an embodiment, an operation in which the electronic device transmits the data frame to the external electronic device through the first frequency band may be performed independently of whether a sector sweep frame transmitted by the external electronic device is received.

An electronic device (e.g., the STA 301 of FIG. 3, the non-AP MLD 601 of FIG. 4, the non-AP MLD 1001 of FIG. 9, or the electronic device 1801 of FIG. 18), according to an embodiment, may include a wireless communication circuit (e.g., the wireless communication circuit 1010 of FIG. 11 or the wireless communication module 1892 of FIG. 18) configured to transmit and receive a wireless signal. The electronic device may include a processor (e.g., the processor 1020 of FIG. 11 or the processor 1820 of FIG. 18) operatively connected to the wireless communication circuit. The electronic device may include memory (e.g., the memory 1030 of FIG. 11 or the memory 1830 of FIG. 18) storing instructions. The instructions, when executed by the processor individually or collectively, may cause the electronic device to receive, from an external electronic device performing an MLO with the electronic device, one or more sector weep frames for beamforming, through a first frequency band corresponding to a millimeter wave wireless communication channel. The instructions, when executed by the processor individually or collectively, may cause the electronic device to transmit, to the external electronic device, feedback information on the one or more sector sweep frames through a second frequency band that is different from the first frequency band. The feedback information may be included in an A-control subfield of a MAC header of a frame transmitted by the electronic device.

According to an embodiment, the second frequency band may correspond to at least one of frequency bands used in the MLO.

According to an embodiment, the feedback information may include information on a sector sweep frame received with the strongest signal among the one or more sector sweep frames.

An electronic device (e.g., the AP 401 of FIG. 3, the AP MLD 501 of FIG. 4, the AP MLD 901 of FIG. 9, or the electronic device 1804 of FIG. 18), according to an embodiment, may include a wireless communication circuit (e.g., the wireless communication circuit 910 of FIG. 10) configured to transmit and receive a wireless signal. The electronic device may include a processor (e.g., the processor 920 of FIG. 10) operatively connected to the wireless communication circuit. The electronic device may include memory (e.g., the memory 930 of FIG. 10) storing instructions. The instructions, when executed by the processor individually or collectively, may cause the electronic device to transmit, to an external electronic device performing an MLO with the electronic device, one or more sector weep frames for beamforming, through a first frequency band corresponding to a millimeter wave wireless communication channel. The instructions, when executed by the processor individually or collectively, may cause the electronic device to receive, from the external electronic device, feedback information on the one or more sector sweep frames through a second frequency band that is different from the first frequency band. A MAC header of the one or more sector sweep frames may include information indicating that feedback for the one or more sector sweep frames is to be transmitted through the second frequency band.

According to an embodiment, the second frequency band may correspond to at least one of frequency bands used in the MLO.

According to an embodiment, the feedback information may include information on a sector sweep frame received with the strongest signal among the one or more sector sweep frames.

According to an embodiment, the instructions, when executed by the processor individually or collectively, may cause the electronic device to determine a beam direction based on the feedback information. The instructions, when executed by the processor individually or collectively, may cause the electronic device to transmit a data frame to the external electronic device through the first frequency band, based on the beam direction.

According to an embodiment, the feedback information may be included in an A-control subfield of a MAC header of a frame transmitted by the external electronic device.

According to an embodiment, the external electronic device may transmit the one or more sector sweep frames to the electronic device. The instructions, when executed by the processor individually or collectively, may cause the electronic device to determine a beam direction for receiving a sector sweep frame from the external electronic device, based on the feedback information.

According to an embodiment, the instructions, when executed by the processor individually or collectively, may cause the electronic device to change an ack policy of the frame transmitted by the electronic device when a sector sweep frame is received from the external electronic device.

According to an embodiment, an operation in which the electronic device transmits a data frame to the external electronic device through the first frequency band may be performed independently of whether a sector sweep frame transmitted by the external electronic device is received.

## Claims

1. An electronic device (401; 501; 901; 1804) comprising:
a wireless communication circuit (910) configured to transmit and receive a wireless signal;
a processor (920) operatively connected to the wireless communication circuit (910); and
memory (930) storing instructions,
wherein the instructions, when executed by the processor (920) individually or collectively, cause the electronic device (401; 501; 901; 1804) to:
transmit, to an external electronic device (301; 601; 1001; 1801) performing a multi-link operation (MLO) with the electronic device (401; 501; 901; 1804), one or more sector sweep frames for beamforming, through a first frequency band corresponding to a millimeter wave wireless communication channel;
receive, from the external electronic device (301; 601; 1001; 1801), feedback information on the one or more sector sweep frames through a second frequency band that is different from the first frequency band;
transmit a data frame to the external electronic device (301; 601; 1001; 1801) through the first frequency band, based on the feedback information; and
receive a data frame from the external electronic device (301; 601; 1001; 1801) through the second frequency band.

2. The electronic device (401; 501; 901; 1804) of claim 1, wherein the second frequency band corresponds to at least one of frequency bands used in the MLO.

3. The electronic device (401; 501; 901; 1804) of one of claims 1 and 2, wherein the feedback information comprises information on a sector sweep frame received with a strongest signal among the one or more sector sweep frames.

4. The electronic device (401; 501; 901; 1804) of one of claims 1 to 3, wherein the instructions, when executed by the processor (920) individually or collectively, cause the electronic device (401; 501; 901; 1804) to:
determine a beam direction based on the feedback information; and
transmit a data frame to the external electronic device (301; 601; 1001; 1801) through the first frequency band, based on the beam direction.

5. The electronic device (401; 501; 901; 1804) of one of claims 1 to 4, wherein the feedback information is comprised in an aggregated control (A-control) subfield of a medium access control (MAC) header of a frame transmitted by the external electronic device (301; 601; 1001; 1801).

6. The electronic device (401; 501; 901; 1804) of one of claims 1 to 5, wherein a MAC header of a frame transmitted by the electronic device (401; 501; 901; 1804) comprises information indicating that feedback for the frame is to be transmitted through the second frequency band.

7. The electronic device (401; 501; 901; 1804) of one of claims 1 to 6, wherein
the external electronic device (301; 601; 1001; 1801) is configured to transmit the one or more sector sweep frames to the electronic device (401; 501; 901; 1804), and
the instructions, when executed by the processor (920) individually or collectively, cause the electronic device (401; 501; 901; 1804) to determine a beam direction for receiving a sector sweep frame from the external electronic device (301; 601; 1001; 1801), based on the feedback information.

8. The electronic device (401; 501; 901; 1804) of one of claims 1 to 7, wherein the instructions, when executed by the processor (920) individually or collectively, cause the electronic device (401; 501; 901; 1804) to change an acknowledgment (ack) policy of the frame transmitted by the electronic device (401; 501; 901; 1804) when a sector sweep frame is received from the external electronic device (301; 601; 1001; 1801).

9. The electronic device (401; 501; 901; 1804) of one of claims 1 to 8, wherein an operation in which the electronic device (401; 501; 901; 1804) transmits the data frame to the external electronic device (301; 601; 1001; 1801) through the first frequency band is performed independently of whether a sector sweep frame transmitted by the external electronic device (301; 601; 1001; 1801) is received.

10. An electronic device (301; 601; 1001; 1801) comprising:
a wireless communication circuit (1010; 1892) configured to transmit and receive a wireless signal;
a processor (1020; 1820) operatively connected to the wireless communication circuit (1010; 1892); and
memory (1030; 1830) storing instructions,
wherein the instructions, when executed by the processor (1020; 1820) individually or collectively, cause the electronic device (301; 601; 1001; 1801) to:
receive, from an external electronic device (401; 501; 901; 1804) performing a multi-link operation (MLO) with the electronic device (301; 601; 1001; 1801), one or more sector sweep frames for beamforming, through a first frequency band corresponding to a millimeter wave wireless communication channel; and
transmit, to the external electronic device (401; 501; 901; 1804), feedback information on the one or more sector sweep frames through a second frequency band that is different from the first frequency band, and
wherein the feedback information is comprised in an aggregated control (A-control) subfield of a medium access control (MAC) header of a frame transmitted by the electronic device (301; 601; 1001; 1801).

11. The electronic device (301; 601; 1001; 1801) of claim 10, wherein the second frequency band corresponds to at least one of frequency bands used in the MLO.

12. The electronic device (301; 601; 1001; 1801) of one of claims 10 and 11, wherein the feedback information comprises information on a sector sweep frame received with a strongest signal among the one or more sector sweep frames.

13. An electronic device (401; 501; 901; 1804) comprising:
a wireless communication circuit (910) configured to transmit and receive a wireless signal;
a processor (920) operatively connected to the wireless communication circuit (910); and
one or more memories (930) storing instructions,
wherein the instructions, when executed by the processor (920) individually or collectively, cause the electronic device (401; 501; 901; 1804) to:
transmit, to an external electronic device (301; 601; 1001; 1801) performing a multi-link operation (MLO) with the electronic device (401; 501; 901; 1804), one or more sector sweep frames for beamforming, through a first frequency band corresponding to a millimeter wave wireless communication channel; and
receive, from the external electronic device (301; 601; 1001; 1801), feedback information on the one or more sector sweep frames through a second frequency band that is different from the first frequency band, and
wherein a medium access control (MAC) header of the one or more sector sweep frames comprises information indicating that feedback for the one or more sector sweep frames is to be transmitted through the second frequency band.

14. The electronic device (401; 501; 901; 1804) of claim 13, wherein the second frequency band corresponds to at least one of frequency bands used in the MLO.

15. The electronic device (401; 501; 901; 1804) of one of claims 13 and 14, wherein the feedback information comprises information on a sector sweep frame received with a strongest signal among the one or more sector sweep frames.
